# EUROPEAN PATENT APPLICATION

(11) **EP 2 440 003 A1**
(43) Date of publication of application: **11.04.2012**
(21) Application number: 11184058.3
(22) Date of filing: 06.10.2011
(51) Int. Cl.: H05B 3/46, H05B 3/48

(54) **Cartridge Heater With An Alloy Case**

(30) Priority: 06.10.2010 US 390395 P
(71) Applicant: Nexthermal Corporation, Battle Creek, MI 49037 (US)
(72) Inventor: Wheeler, Jeff, Battle Creek, MI Michigan 49017 (US)
(74) Representative: Schaumburg, Thoenes, Thurn, Landskron, Eckert

(57) **Abstract**

A cartridge heater may include an elongated core assembly inside an elongated metal sheath having first and second ends and wherein the elongated metal sheath is made from at least one of aluminum alloy and copper alloy. The elongated core assembly includes a resistance heating element mounted to an elongated insulating core with electric leads extending outside the elongated metal sheath. The core assembly substantially fills the elongated metal sheath with a very thin space between an inside surface of the elongated metal sheath and an outside surface of the core assembly

## Description

### CROSS REFERENCE TO RELATED APPLICATIONS

This application claims the benefit of U.S. Application Serial No. 61/390,395 filed October 6, 2010, which is incorporated herein in its entirety.

### BACKGROUND OF THE INVENTION

### Field of the Invention

The invention relates to a cartridge heater having a case made with a material that optimizes the thermal conductivity of the system, such as an aluminum alloy or a copper alloy.

### Description of the Related Art

Conventional tubular heaters most often comprise a heating element in a metal tube (sheath) filled with compacted magnesium oxide powder between the element and the inside of the sheath which radiates heat to an adjacent metal plate or to a fluid or to atmosphere, with a watt density typically below 60 W/in². Because of the low watt densities these heaters do not need to have intimate contact with the product being heated to provide good service life. Cartridge heaters are a type of tubular heater designed to carry higher watt densities, typically up to 160 W/in², but can go higher depending on the intended application. These typically are used in industrial applications to transmit heat to a wide range of equipment and apparatuses, and particularly where higher temperatures, or faster rates of recovery from heat loss are required. Such higher temperature applications include rubber vulcanization and packaging where a metal tool must be heated up to 650°F to 800°F, die casting where tools are heated to 1400°F, and sintering where tools are heated to 2000°F. Unlike conventional tubular heaters, cartridge heaters minimize the air space between the sheath and the surrounding material to be heated, most often metal. This close fit is required to provide a long service life due the air space acting as a layer of insulation, reducing the heat transfer to the tool and increasing the service temperature of the heater. Cartridge heaters are generally cylindrical and adapted to be inserted in appropriately dimensioned bore holes in the apparatuses to be heated. Heaters for such high temperature applications are cartridge heaters with stainless steel sheaths, also called high watt density heaters, because stainless steel can withstand the higher temperatures associated with such applications with minimal oxidation. But cartridge heaters with stainless steel sheaths suffer from several drawbacks, including the heater's cost to produce, the heater's heating efficiency, and the heater's energy consumption.

### SUMMARY OF THE INVENTION

A cartridge heater according to one embodiment of the invention includes an elongated core assembly sealed inside an elongated metal sheath having first and second ends and wherein the elongated metal sheath is made from at least one of aluminum alloy and copper alloy. The elongated core assembly includes a resistance heating element mounted to an elongated insulating core with electric leads extending outside the elongated metal sheath and the core assembly substantially fills the elongated metal sheath with a very thin space between an inside surface of the elongated metal sheath and an outside surface of the core assembly.

### BRIEF DESCRIPTION OF THE DRAWINGS

In the drawings:
Figure 1 is a perspective view of a cartridge heater according to a first embodiment of the invention.
Figure 2 is a schematic perspective view of a portion of a package sealing machine including the cartridge heater illustrated in Figure 1.
Figure 3 is a graph of watts output by two cartridge heaters having varying sheath compositions as a function of time during a pre-heat of the package sealing machine illustrated in Figure 2.
Figure 4 is a graph of watts output by two cartridge heaters having varying sheath compositions as a function of time during a run time of the package sealing machine illustrated in Figure 2.
Figure 5 is a perspective view of a cartridge heater according to a second embodiment of the invention.
Figure 6 is a graph of temperature as a function of the length of the cartridge heater illustrated in Figure 5.
Figure 7 is a perspective view of a cartridge heater according to a third embodiment of the invention.

### DESCRIPTION OF AN EMBODIMENT OF THE INVENTION

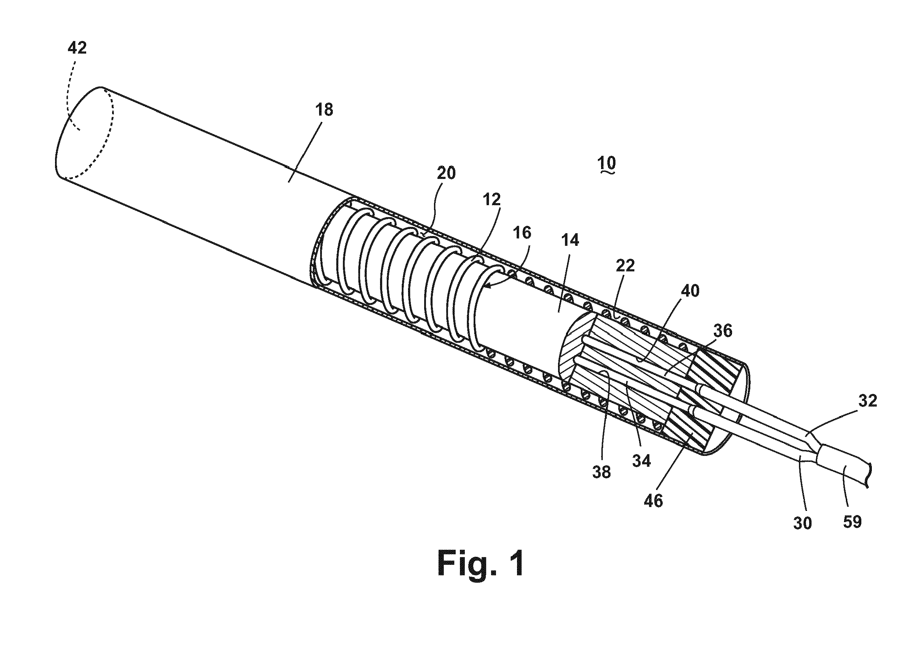

Referring now to Figure 1, an embodiment of the invention is illustrated as including a cartridge heater assembly 10. An electrical resistance heating means such as a resistance wire heating element 12 may be coiled around an elongated core 14 of insulating material to form a core assembly 16. An elongated metal sheath or elongated alloy sheath 18, made from a high thermal conductivity alloy material such as aluminum alloy or copper alloy may be provided around the core assembly 16. The elongated alloy sheath 18 may be coaxial with the core assembly 16 and radially spaced from the resistance wire heating element 12 such that a very thin space 20 is formed between the coiled resistance wire heating element 12 and an interior side 22 of the elongated alloy sheath 18. The space 20 may be very minimal such that the resistance wire heating element 12 may be positioned close to the elongated alloy sheath 18 to provide better internal heat transfer from the resistance wire heating element 12 to the elongated alloy sheath 18.

The resistance wire heating element 12 may be made from any suitable alloy; by way of a non-limiting example the resistance wire heating element 12 may be a nickel chromium alloy. Although a coiled configuration has been illustrated for the resistance wire heating element 12, it has been contemplated that the resistance wire heating element 12 may be of any configuration. Each end of the resistance wire heating element 12 may be connected to electrical leads 30 and 32 by electrical connection means such as connector pins 34 and 36, respectively, which extend through bores 38 and 40 in the elongated core 14. The electrical leads 30, 32 may extend out one end of the elongated alloy sheath 18. The electrical leads 30, 32 may be coupled into a suitable power supply (not shown). One end of the cartridge heater assembly 10 may be closed with an alloy end-disk 42, which may be welded in place to provide a watertight seal. The other end of the cartridge heater assembly 10 where the electrical leads 30, 32 exit the cartridge heater assembly 10 may be sealed with a ceramic stopper 46.

The elongated core 14 may be a layer of dielectric material such as magnesium oxide, which may act to support the resistance wire heating element 12 from engagement with the elongated alloy sheath 18. The elongated core 14 may insure rapid heat dissipation from the resistance wire heating element 12 to the elongated alloy sheath 18.

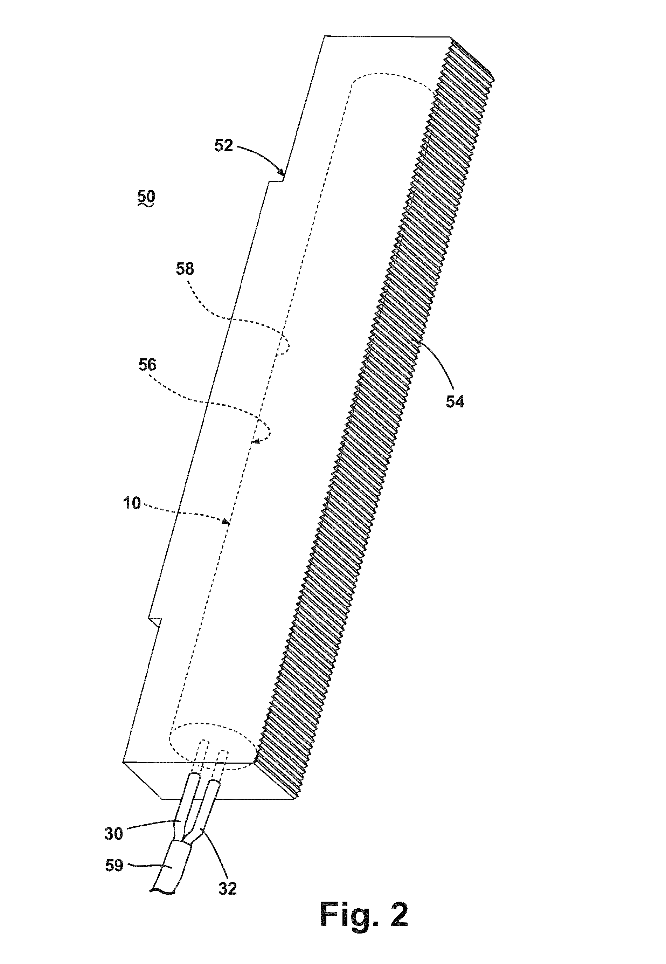

As illustrated, the core assembly 16 may have a diameter that is less than the inside diameter of the elongated alloy sheath 18 such that the space 20 may be formed. Figure 2, illustrates a cross section of the cartridge heater assembly 10 and better illustrates the space 20.

Alternatively, it has been contemplated that the core assembly 16 may be centrally positioned in the elongated alloy sheath 18 and surrounded by an insulating material such as magnesium oxide powder (not shown). After the granulated magnesium oxide is introduced into the elongated alloy sheath 18, the elongated alloy sheath 18 may be subjected to compression forces, for example, by swaging, to compact the granulated magnesium oxide to improve its dielectric and thermal conductive properties.

Different applications will place different demands on the cartridge heater assembly 10. Figure 2 illustrates one anticipated environment for the cartridge heater assembly 10 in the form of a portion of a package sealing machine 50. Such a package sealing machine 50 is a low temperature application and joins plastic materials, such as polyethylene bags used for packaging food, by the use of heat and force.

The package sealing machine or package sealing machine 50 shares many features of a conventional package sealing machine and will not be described in detail herein except as necessary for a complete understanding of the invention. The package sealing machine 50 is illustrated as including a straight packaging jaw bar 52 having a sealing face 54. The sealing face 54 is illustrated as including multiple vertical serrations, which will form a vertical crimp impression on the sealed package. Although only one packaging jaw bar 52 is illustrated, it will be understood by one skilled in the art that the package sealing machine 50 would include two such packaging jaw bars 52 and that the sealing faces 54 of each packaging jaw bar 52 would have matching serration patterns that are aligned such that the sealing faces 54 may engage each other for a close fit to assure uniform contact and application of uniform pressure across the face of the seal. It has been contemplated that the sealing face 54 of each packaging jaw bar 52 may have horizontal serrations or that the sealing face 54 of each packaging jaw bar 52 may be smooth. Regardless of the type of sealing face 54, the packaging jaw bar 52 may be formed from a material, such as aluminum or steel, which may be suitable to sustain the clamping force used in the packaging process.

The package sealing machine 50 may include a drilled hole or bore 56, having a perimeter wall 58, in which the cartridge heater assembly 10 may be inserted for heating of the packaging jaw bar 52 and sealing face 54. For easy installation, the cartridge heater assembly 10 may be made slightly undersized relative to the perimeter wall 58 of the bore 56. The lesser the clearance between the cartridge heater assembly 10 and the perimeter wall 58 of the bore 56, the longer life the cartridge heater assembly 10 will have. When the cartridge heater assembly 10 is inserted into the packaging jaw bar 52 the electrical leads 30 and 32 may be operably coupled through a lead 59 to a power source (not shown) and a controller (not shown). A temperature sensor (not shown) may be operably coupled with the controller and either the packaging jaw bar 52 or the cartridge heater assembly 10 such that the temperature sensor may send a signal indicative of the temperature of the packaging jaw bar 52 or the cartridge heater assembly 10 to the controller.

During operation, a pre-heat feature may be used wherein the controller actuates the cartridge heater assembly 10 to maintain a minimum predetermined temperature level, which may be set for the package sealing machine 50 before production begins. The pre-heat may help to maintain a minimum temperature, which allows for faultless sealing of the first seal and every subsequent seal during the run time which takes place thereafter. More specifically, once actuated for the pre-heat, the cartridge heater assembly 10 stays on until the packaging jaw bar 52 reaches the minimum predetermined temperature level or set point. After the packaging jaw bar 52 reaches the set point, the controller turns off the cartridge heater assembly 10 until the temperature of the packaging jaw bar 52 falls below the set point less some acceptable differential at which point the cartridge heater assembly 10 is actuated again. In this manner, the cartridge heater assembly 10 is cycled on and off to maintain the set point temperature of the packaging jaw bar 52.

During both the pre-heat and the subsequent run time of the package sealing machine 50, heating of the cartridge heater 10 may result in heating of the perimeter wall 58 through conduction. Heat may then radiate from the perimeter wall 58 into the packaging jaw bar 52 to the sealing face 54. The package sealing machine 50 may then be run for some predetermined time to seal some predetermined number of items. It should be noted that the seal area, or area where the item to be sealed is placed adjacent to the sealing face 54 may be less than the total area of the sealing face 54.

It may be understood that during the run time of the package sealing machine 50 the package sealing machine 50 may go through one cycle for each item to be sealed. Such a cycle from a heating standpoint may include having the packaging jaw bar 52 heated to the set point, sealing the item to be sealed (which reduces the temperature of the packaging jaw bar 52 as heat is transferred to the item to be sealed), and then returning the temperature of the packaging jaw bar 52 to the set point again. The speed of the package sealing machine 50 may affect the temperature of the sealing area, since heat is constantly being drawn off the sealing face 54 by the item being sealed.

In low temperature packaging applications, the temperature of the cartridge heater assembly 10 must be constantly monitored and controlled to ensure that each and every heating cycle and subsequent seal is the same. Temperature control means the ability to maintain the predetermined temperature uniformly over the full seal area from cycle to cycle. The heat must also be sufficient to penetrate from the sealing face 54 through the item to be sealed but not be so high that it damages the item to be sealed.

It has been determined that the cylindrical sheath or casing 18 being made of any suitable high thermal conductivity alloy provides many benefits during its use in such low temperature packaging applications. Multiple materials were tested to determine the most suitable material for the elongated alloy sheath 18 of the cartridge heater assembly 10.

Table 1 below shows all of the materials considered as well as their thermal conductivity and material components.

**TABLE 1: MATERIALS EVALUATED**

| | AK Steel 321 Stainless Steel | Aluminum 3003-H14 | Aluminum 5052-H32 | Aluminum 6061-T651 | Aluminum 2219-O | Brass 360 |
|---|---|---|---|---|---|---|
| Thermal Conductivity (W/m•K) | 16-22 | 159 | 138 | 167 | 171 | 115 |
| Material Components | | | | | | |
| Aluminum, AL (%) | - | 96.7-99.0 | 95.7-97.7 | 95.8-98.6 | 91.5-93.8 | |
| Carbon, C (%) | <=0.0800 | - | - | - | - | |
| Chromium, Cr (%) | 17.0-19.0 | - | 0.150-0.350 | 0.0400-0.350 | - | |
| Copper, Cu (%) | | 0.0500-0.200 | <=0.100 | 0.150-0.400 | 5.80-6.80 | 60-63 |
| Iron, Fe (%) | 65.295-74.0 | <=0.700 | <=0.400 | <=0.700 | <=0.30 | <0.35 |
| Magnesium, Mg (%) | - | - | 2.20-2.80 | 0.800-1.20 | <=0.020 | |
| Manganese, Mn (%) | 2.00 | 1.00-1.50 | <=0.100 | <=0.150 | 0.20-0.40 | |
| Nickel, Ni(%) | 9.00-12.0 | - | - | - | - | |
| Nitrogen, N (%) | <=0.100 | - | - | - | - | |
| Other, each (%) | - | <=0.0500 | <=0.0500 | <=0.0500 | <=0.050 | |
| Other, total (%) | - | <=0.150 | <=0.150 | <=0.150 | <=0.15 | |
| Phosphorus, P (%) | <=0.0450 | - | - | - | - | |
| Silicon, Si (%) | <=0.750 | <=0.600 | <=0.250 | 0.400-0.800 | <=0.20 | |
| Sulfur, S (%) | <=0.0300 | - | - | - | 0.10-0.25 | |
| Titanium, Ti (%) | <=0.700 | - | - | <=0.150 | 0.020-0.10 | |
| Zinc, Zn (%) | - | <=0.100 | <=0.100 | <=0.250 | <=0.10 | 35.5 |
| Vanadium, V (%) | - | - | - | - | 0.050-0.15 | |
| Lead, Pb (%) | | | | | | 2.5-3.7 |

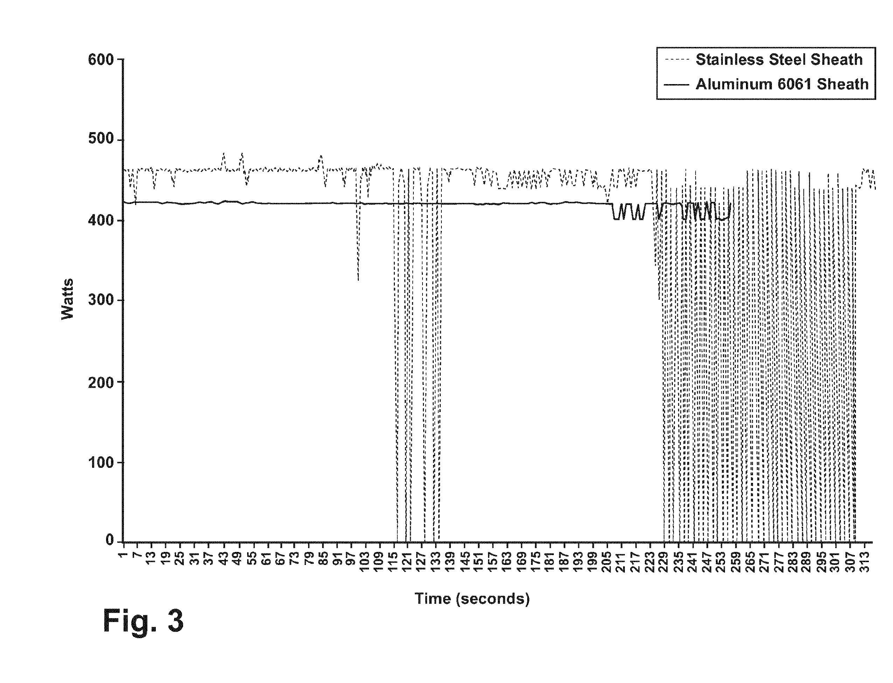

Figure 3 illustrates a comparison between a cartridge heater assembly having a stainless steel sheath, data is labeled stainless steel sheath, and the cartridge heater assembly 10 having an aluminum 6061 sheath, data is labeled aluminum 6061 sheath. The graph illustrates the watts output by both assemblies as a function of time during the pre-heat of the package sealing machine 50. It should be noted that the only difference between the two assemblies is the composition of the material used to make the sheath and that no controller settings were changed between the tests.

As may be easily seen, the cartridge heater assembly 10 having the aluminum 6061 elongated alloy sheath 18 stays on until it reaches the set point. After reaching the set point the cartridge heater assembly 10 has only small ripples in the wattage output to maintain the set point. Alternatively, it may be seen that the cartridge heater assembly having the stainless steel sheath needed to be switched on and off a number of times to maintain the step point. It should be noted that during the pre-heat the set point was set to 300 °F.

It should be noted that each actuation and subsequent deactivation of the cartridge heater assembly 10 to maintain the set point during both the pre-heat and run time of the package sealing machine 50 is caused by a power switching device, such as a physical relay (not shown) being switched on and off to provide power to the cartridge heater assembly 10. Each movement of the relay takes a certain amount of energy; thus, the less cycling of the cartridge heater assembly 10 the less energy that is used. Conversely, not only does switching the relay on and off more increase the cost but the relay itself burns out more quickly and will need to be replaced more frequently. As the cartridge heater assembly 10 having the aluminum 6061 sheath 18 required less cycling and was able to maintain a steady average wattage output and required less time to pre-heat the packaging jaw bar 52, its use resulted in significant energy reduction compared to the cartridge heater assembly having the stainless steel sheath. Table 2 below shows the power used by each cartridge heater assembly during the pre-heat based upon the average wattage used during the time it took each cartridge assembly to pre-heat. The result is that the cartridge heater assembly 10 having the aluminum 6061 sheath 18 has approximately a 25% energy savings during the pre-heat of the package sealing machine 50.

**TABLE 2: POWER USED DURING HEAT UP**

| | **Test with Stainless Steel Sheath** | **Test with Aluminum 6061 Sheath** |
|---|---|---|
| Average watts Used During Heat Up | 444.6526786 | 412.6249213 |
| Time To Heat Up (min.sec) | 5.28 | 4.26 |
| **Resulting Power (Wh) Used to during Pre-heat** | **39.12943571** | **29.29636941** |

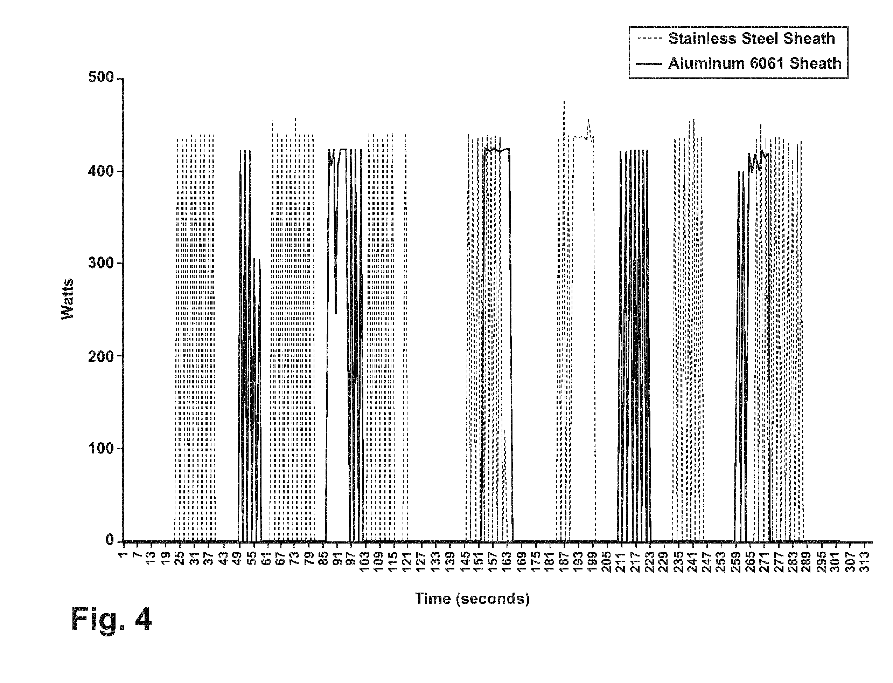

Figure 4 illustrates a comparison during run time between the cartridge heater assembly having a stainless steel sheath, data is labeled stainless steel sheath, and the cartridge heater assembly 10 having the aluminum 6061 sheath, data is labeled aluminum 6061 sheath. The graph illustrates the watts output by both assemblies as a function of time while the package sealing machine 50 is running. It should be noted that during the run time test the package sealing machine 50 was set to seal thirty bags per minute with a 320 millisecond seal time and was run at a 300 °F set point. During the beginning of the run time, when the cartridge heater assembly having the aluminum 6061 sheath was used the temperature of the packaging jaw bar 52 only dropped 1 °F while a typical drop for a cartridge heater assembly having a stainless steel sheath is 4-6 °F. Thus, using the cartridge heater assembly having the aluminum 6061 sheath provided a more uniform temperature. It should also be noted that the only difference between the two assemblies is the composition of the material used to make the sheath and that no controller settings were changed between the tests. As may be easily seen, the cartridge heater assembly 10 having the aluminum 6061 sheath 18 needed much less relaying on and off to maintain the packaging jaw bar 52 at the set point. Alternatively, it may be seen that the cartridge heater assembly having the stainless steel sheath needed to be switched on and off a substantial number of times to maintain the step point. Table 3 below shows the power used by each cartridge heater assembly during the run time based upon the average wattage used during the five minute run time. The result is that the cartridge heater assembly 10 having the aluminum 6061 sheath 18 has approximately a 25% energy savings during the run time of the package sealing machine 50.

**TABLE 3: POWER USED DURING RUN TIME**

| | **Test with Stainless Steel Sheath** | **Test with Aluminum 6061 Sheath** |
|---|---|---|
| Average watts Used During Run Time | 94.96840532 | 70.88564784 |
| Peak Watts | 475.92 | 420 |
| Run Time (min.sec) | 5.0 | 5.0 |
| **Resulting Power (Wh) used during Run Time** | **7.914033776** | **5.90713732** |

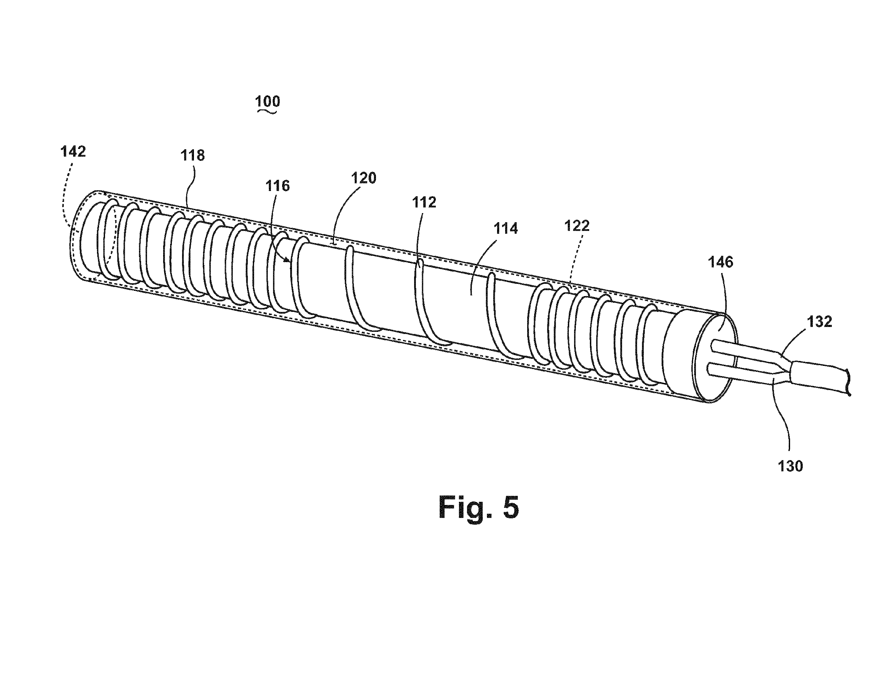

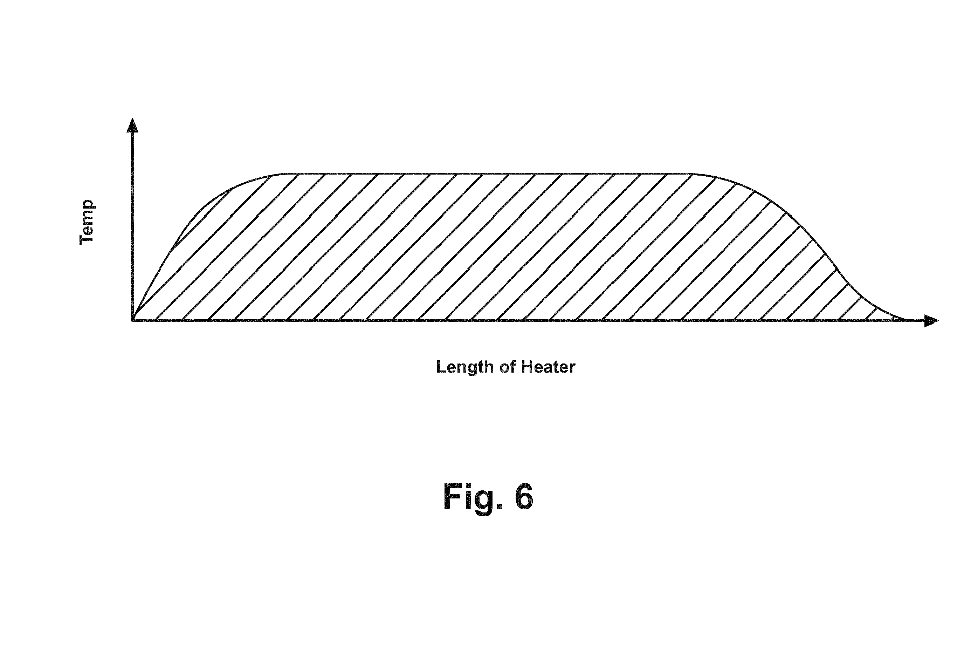

Although the winding of the resistance wire heating element 12 in Figure 1 is illustrated as having even distribution of the resistance wire heating element 12 all along the length of the cartridge heater assembly 10 it has been contemplated that additional coils at each end of the cartridge heater assembly 10, such that the coils have a greater density, may ensure maximum uniformity of the temperature along the cartridge heater assembly 10 and any application the cartridge heater assembly 10 may be used in. For example, Figure 5 illustrates a second embodiment of cartridge heater assembly 100 having an alloy sheath 118. The second embodiment 100 is similar to the first embodiment 10. Therefore, like parts will be identified with like numerals increased by 100, with it being understood that the description of the like parts of the first embodiment applies to the second embodiment, unless otherwise noted. Further, all of the description and operation of the cartridge heater assembly 10 in Figures 1 and 2 may apply to the cartridge heater assembly 100 in Figure 5. Figure 5 is identical to the embodiment shown in Figure 1 except that the resistance wire heating element 112 is distributed differently along the length of the cartridge heater assembly 100. More specifically, the resistance wire heating element 112 has a greater distribution at each end of the cartridge heater assembly 100. This increases the surface watt density at the ends of the cartridge heater assembly 100 to counter for heat loss and allow for a more uniform temperature along the length of the cartridge heater assembly 100. Figure 6 is a graph illustrating the temperature uniformity along the length of the cartridge heater assembly 100 due to such greater surface watt density at each end of the cartridge heater assembly 100.

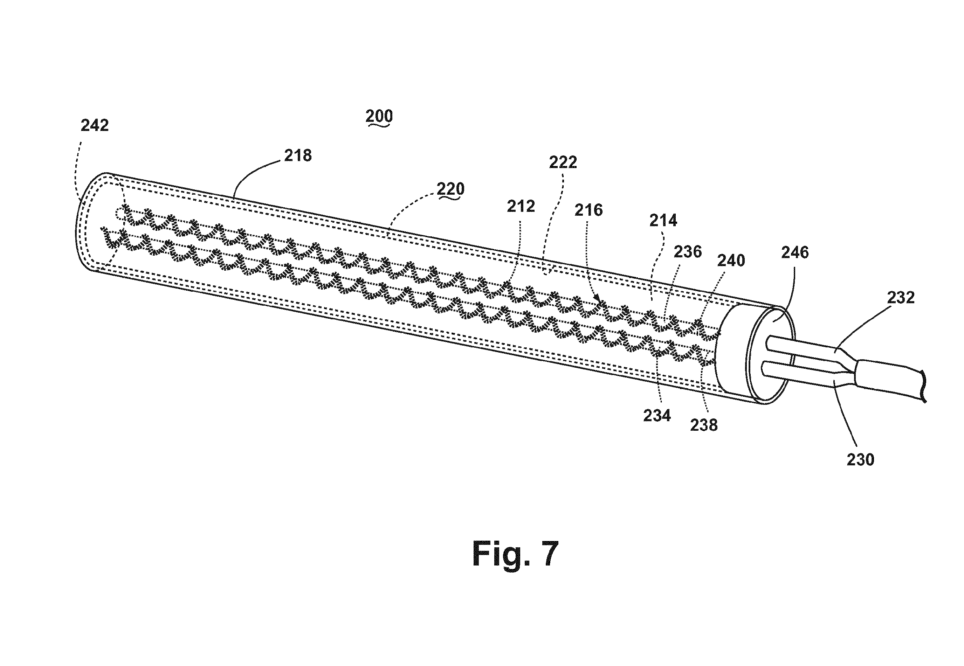

Figures 1-6 have thus far described a cartridge heater assembly 10 having a high watt density wherein the resistance wire heating element 12 is relatively close to the elongated alloy sheath 18. It has also been contemplated that the elongated alloy sheath 18 may be used with low and medium watt density cartridge heater assemblies, which have an operating range up to 80W/in2 depending on application. By way of a non-limiting example, Figure 7 illustrates a third embodiment of a cartridge heater assembly 200 having an elongated alloy sheath 218. The third embodiment 200 is similar to the first embodiment 10. Therefore, like parts will be identified with like numerals increased by 200, with it being understood that the description of the like parts of the first embodiment applies to the third embodiment, unless otherwise noted. Figure 7 is identical to the embodiment shown in Figure 1 except that the resistance wire heating element 212 is configured differently into two coils and is located inside the elongated core 214 giving the cartridge heater assembly 200 a lower watt density. All of the description and operation of the cartridge heater assembly 10 in Figures 1 and 2 may apply to the cartridge heater assembly 200 in Figure 7.

While the invention has been specifically described in connection with certain specific embodiments thereof, it is to be understood that this is by way of illustration and not of limitation, and the scope of the appended claims should be construed as broadly as the prior art will permit. For example, the heating cartridge assemblies described above may also be used in low temperature applications involving sealing platens, which may accommodate one or more cartridge heaters having suitable metal sheaths.

## Claims

1. A cartridge heater comprising:
an elongated core assembly sealed inside an elongated metal sheath having first and second ends, the elongated core assembly including a resistance heating element mounted to an elongated insulating core with electric leads extending outside the metal sheath,
wherein the core assembly substantially fills the elongated metal sheath with a thin space between an inside surface of the elongated metal sheath and an outside surface of the core assembly, and
wherein the elongated metal sheath is made from at least one of aluminum alloy and copper alloy.

2. The cartridge heater of claim 1 wherein the elongated metal sheath is cylindrical.

3. The cartridge heater of any of claims 1 and 2, further comprising an alloy end-disk operably coupled to the first end of the elongated metal sheath to close the first end and a ceramic stopper operably coupled to the second end of the elongated metal sheath and wherein the leads extend through the ceramic stopper.

4. The cartridge heater of any one of claims 1-3 wherein the elongated insulating core includes dielectric material.

5. The cartridge heater of claim 4 wherein the dielectric material includes magnesium oxide.

6. The cartridge heater of any one of claims 1-5 wherein the resistance heating element is mounted on an outside surface of the elongated insulating core.

7. The cartridge heater of any one of claims 1-6 wherein the resistance heating element is a resistance wire heating element.

8. The cartridge heater of claim 7 wherein the resistance wire heating element is coiled around an outside surface of the elongated insulating core.

9. The cartridge heater of claim 8 wherein the coiled resistance wire heating element is evenly distributed along the elongated insulating core.

10. The cartridge heater of claim 8 wherein the coiled resistance wire heating element is coiled to have a greater density at the first and second ends of the elongated metal sheath.

11. The cartridge heater of any one of claims 1-10 wherein the elongated metal sheath is coaxial with the elongated core assembly.

12. The cartridge heater of any one of claims 1-11, further comprising an insulating material within the very thin space.

13. The cartridge heater of any one of claims 1-12 wherein the resistance heating element is mounted inside the elongated insulating core.

14. The cartridge heater of claim 13 wherein the resistance heating element further comprises two coils mounted inside the elongated insulating core.

15. The cartridge heater of any one of claims 1-14 wherein the elongated metal sheath is an aluminum 6061 sheath.
